# EUROPEAN PATENT APPLICATION

(11) **EP 2 608 551 A2**
(43) Date of publication of application: **26.06.2013**
(21) Application number: 12194994.5
(22) Date of filing: 30.11.2012
(51) Int. Cl.: H04N 13/00, H04N 13/04

(54) **Display apparatus and control method thereof**

(30) Priority: 23.12.2011 KR 20110141142
(71) Applicant: Samsung Electronics Co., Ltd., Gyeonggi-do 443-742 (KR)
(72) Inventor: Kim, Hyung-rae, Seoul (KR); Park, Jason, Gyeonggi-do (KR); Sung, Jun-ho, Seoul (KR); Yun, Sang-un, Seoul (KR); Cho, Bong-hwan, Gyeonggi-do (KR); Hwang, Min-cheol, Seoul (KR)
(74) Representative: Clark, David James

(57) **Abstract**

A display apparatus and a control method thereof are provided. The display apparatus includes an image processor processing a three-dimensional (3D) image including a left-eye image and a right-eye image; a display unit alternately displaying the left-eye image and the right-eye image of the 3D image processed by the image processor; and a controller determining representative values of images in reference regions of the left-eye image and the right-eye image, the reference regions referring to corresponding positions of the left-eye and right-eye images, and displaying the determined representative values of the reference regions on at least one of the left-eye image and the right-eye image.

## Description

### BACKGROUND

### 1. Field

Apparatuses and methods consistent with the exemplary embodiments relate to a display apparatus and a control method thereof, and more particularly to a display apparatus which alternately displays three-dimensional (3D) images including left-eye and right-eye images, and a control method thereof.

### 2. Description of the Related Art

A display apparatus, such as a monitor for an imaging device and a television (TV), alternately displays left-eye and right-eye images to provide three-dimensional (3D) images. Generally, such 3D images are obtained by at least two cameras. Here, left-eye and right-eye images may have different values from each other due to differences in characteristics between the cameras, and thus there is needed an operation of adapting white balance between the two images. To this end, for example, there is a method of correcting characteristics of cameras or an imaging device while taking pictures of white paper with a plurality of cameras at the same time and observing disparities between left-eye images and right-eye images.

However, accuracy of such correction changes depending on skill of a person who conducts correction. Further, it is inconvenient to observe an image disparity with the naked eye.

### SUMMARY

One or more exemplary embodiments provide a display apparatus which accurately and conveniently indicates a disparity between left-eye and right-eye images, and a control method thereof.

According to an aspect of an exemplary embodiment, there is provided a display apparatus including: an image processor processing a three-dimensional (3D) image including a left-eye image and a right-eye image; a display unit alternately displaying the left-eye image and the right-eye image of the 3D image processed by the image processor; and a controller determining representative values of images in reference regions of the left-eye image and the right-eye image, the reference regions referring to corresponding positions of the left-eye and right-eye images, and displaying the determined representative values of the reference regions on at least one of the left-eye image and the right-eye image.

The representative value may include an average value of pixels included the reference region of the image.

The controller may superimpose a boundary of the reference region on at least one of the left-eye image and the right eye image.

The controller may superimpose the representative value on at least one of the left-eye image and the right-eye image as on-screen display information (OSD).

The controller may determine at least one of a position and a size of the OSD according to a format of the 3D image.

The OSD may have a first height and a first width when the left-eye image and the right-eye image are transmitted in separate frames

The controller may convert the left-eye image and the right-eye image into a single frame in a first format. The OSD may have a second height when the left-eye image and the right-eye image are converted into a single frame, and the second height may be half the first height. Alternatively, the OSD may have a second width when the left-eye image and the right-eye image are converted into a single frame, and the second width may be half the first width.

The controller may convert the left-eye image and the right-eye image into a single frame in a second format, and the second format may be different than the first format..

According to another aspect of an exemplary embodiment, there is provided a control method of a display apparatus which alternately displays a left-eye image and a right-eye image of a three-dimensional (3D) image, the method including: determining representative values of images in reference regions of the left-eye image and the right-eye image, the reference regions referring to corresponding positions of the left-eye and right-eye images; and displaying the determined representative values of the reference regions on at least one of the left-eye image and the right-eye image.

The representative value may include an average value of pixels included in the reference region of the image.

The control method may further include superimposing a boundary of the reference region on at least one of the left-eye image and the right-eye image.

The control method may include superimposing the representative values on at least one of the left-eye image and the right-eye image as on-screen display information (OSD).

The control method may further include determining at least one of a position and a size of the OSD according to a format of the 3D image. The OSD may have a first height and a first width when the left-eye image and the right-eye image are transmitted in separate frames.

The left-eye image and the right-eye image may be converted into a single frame in a first format.

The OSD may have a second height when the left-eye image and the right-eye image are converted into a single frame and the second height may be half the first height. The OSD may have a second height when the left-eye image and the right-eye image are converted into a single frame and the second height may be half the first height.

The left-eye image and the right-eye image may be converted into a single frame in a second format and the second format may be different from the first format.

According to another aspect of an exemplary embodiment, there is provided an image processing method, the method including processing, by a processor, a three-dimensional (3D) image including a left-eye image and a right-eye image, superimposing boundaries of reference regions on the left-eye image and the right-eye image (the reference regions referring to corresponding positions of the left-eye image and the right-eye image), determining an average value of pixels in the reference regions; and superimposing the average values on the left-eye image and the right-eye image.

As described above, a display or image processing apparatus according to exemplary embodiments may accurately and indicate a disparity between left-eye and right-eye images.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram illustrating a configuration of an display apparatus according to exemplary embodiments;
FIG. 2 is a flowchart illustrating exemplary embodiments of a control method of the display apparatus of FIG. 1;
FIG. 3 shows illustrative examples of left-eye and right-eye images according to exemplary embodiments;
FIG. 4 is a flowchart illustrating other exemplary embodiments of a control method of the display apparatus of FIG. 1; and
FIGS. 5 to 7 show illustrative examples of left-eye and right-eye images according to exemplary embodiments.

### DETAILED DESCRIPTION OF EXEMPLARY EMBODIMENTS

Below, exemplary embodiments will be described in detail with reference to accompanying drawings so as to be easily realized by a person having ordinary knowledge in the art. Exemplary embodiments may be embodied in various forms without being limited to exemplary embodiments set forth herein. Descriptions of well-known parts are omitted for clarity and conciseness, and like reference numerals refer to like elements throughout.

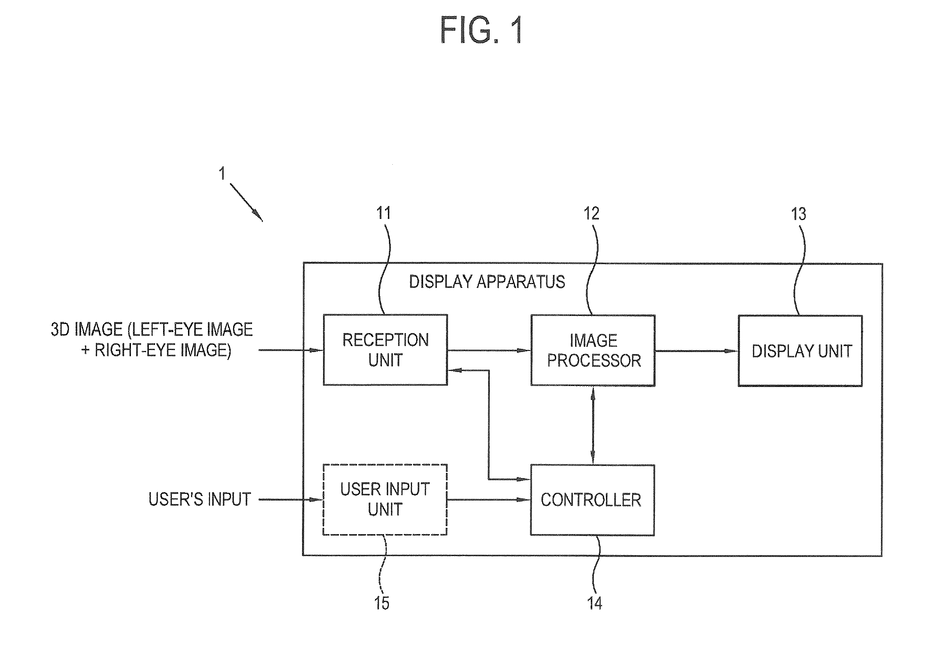

FIG. 1 is a block diagram illustrating a configuration of a display apparatus according to exemplary embodiments. The display apparatus 1 may be, for example, a monitor of an imaging device, a television (TV), etc. The display apparatus 1 includes a reception unit 11, an image processor 12, a display unit 13, and a controller 14.

The reception unit 11 receives a signal of a three-dimensional (3D) image. The 3D image includes a left-eye image and a right-eye image. The left-eye and right-eye images may be obtained by taking images using at least two cameras.

The image processor 12 performs image processing on a 3D image received by the reception unit 11 and extracts left-eye and right-eye images.

The display unit 13 alternately displays the left-eye and the right-eye images extracted by the image processor 12.

The controller 14 provides information for correcting a disparity between left-eye and right-eye images of a 3D image. That is, the controller 14 displays representative values of images in reference regions of left-eye and right-eye images of a 3D image on the display unit 13, the reference regions referring to corresponding positions of the left-eye and right-eye images. As explained in more detail below, the representative values of reference regions may be, for example, an average value of pixels included in a corresponding area, an accumulated value of pixels included in a corresponding area for a predetermined period of time, etc.

The reception unit 11, the image processor 12, and the controller 14 may alternatively be embodied in an image processing apparatus that does not include a display unit. In that instance, the image processing apparatus may output the representative values of reference regions along with the left-eye and right-eye images of the 3D image to an external display unit.

Although not shown in FIG. 1, the controller 14 may include a computer-readable storage medium storing a control program enabling such a control operation and/or a processor executing such a control operation. The computer-readable storage medium may be a nonvolatile memory or a volatile memory.

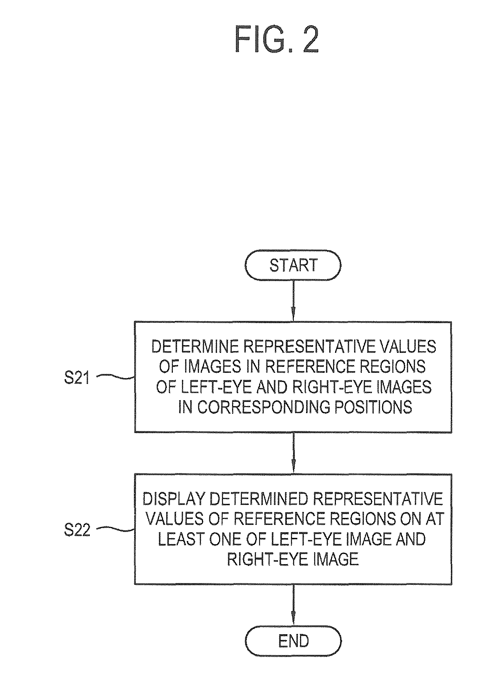

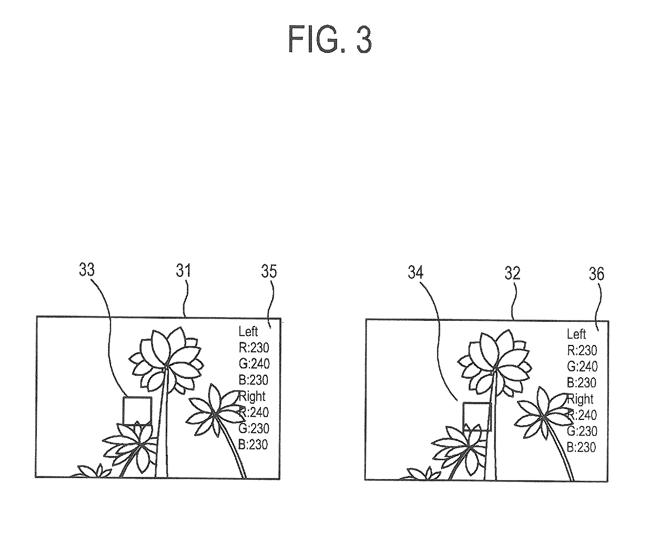

FIG. 2 is a flowchart illustrating a control method of the display apparatus 1 of FIG. 1 according to exemplary embodiments. In operation S21, the display apparatus 1 determines representative values of images in reference regions of left-eye and right-eye images of a 3D image, the reference regions referring to corresponding positions of the left-eye right-eye images. FIG. 3 shows illustrative examples of left-eye and right-eye images according to an exemplary embodiment. The left-eye image 31 and the right-eye image 32 may be images provided for correcting a disparity between two images.

Reference regions 33 and 34 refer to predetermined-sized corresponding regions of the left-eye image 31 and the right-eye image 32. The reference regions 33 and 34 may have a polygonal shape, e.g., a rectangular shape. Position and size of the reference regions 33 and 34 may be predetermined or determined by a user. For example, as shown in FIG. 1, the display apparatus 1 may further include a user input unit 15 to receive input by a user and determine reference regions 33 and 34 in a desired position and/or with a desired size according to input by the user. The display apparatus 1 may mark boundaries of the reference regions 33 and 34 so that the user recognizes the reference regions 33 and 34.

The representative values of the reference regions 33 and 34 are a value representing an image in a corresponding area. For example, the representative values of the reference regions 33 and 34 may be an average value of pixels included in a corresponding area. Alternatively, the representative values of the reference regions 33 and 34 may be an accumulated value of pixels included in a corresponding area for a predetermined period of time.

Referring back to FIG. 2, in operation S22, the display apparatus 1 displays the determined representative values of the reference regions 33 and 34 on at least one of the left-eye image 31 and the right-eye image 32. As shown in FIG. 3, the representative values of the reference regions 33 and 34 may be displayed in a form of on-screen display (OSD) data 35 and 36. The representative values 35 and 36 shown in FIG. 3 are expressed as RGB values of the reference regions 33 and 34 of the left-eye image 31 and the right-eye image 32. In the OSDs 35 and 36 of the representative values in FIG. 3, "Left" denotes the reference region 33 of the left-eye image 31, and "Right" denotes the reference region 34 of the right-eye image 32. The display apparatus 1 may display the OSD data 35 and 36 of the representative values superimposed on both the left-eye image 31 and the right-eye image 32 or on only one of the images 31 and 32. The display apparatus 1 may superimpose the OSD data 35 and 36 of the representative values displayed on the left-eye image 31 and the right-eye image 32 in the same position. Alternatively, the representative values may be transmitted along with the left-eye image 31 or the right-eye image 32 without superimposing the representative values on either image.

Thus, a user may accurately and conveniently recognize a disparity between the left-eye image 31 and the right-eye image 32 through the representative values of the reference regions 33 and 34 of the left-eye image 31 and the right-eye image 32 displayed on the display apparatus 1.

The method illustrated in FIG. 2 may alternatively be embodied in an image processing apparatus that does not include a display unit. In that instance, the image processing apparatus may output the representative values of reference regions along with the left-eye and right-eye images of the 3D image to an external display unit.

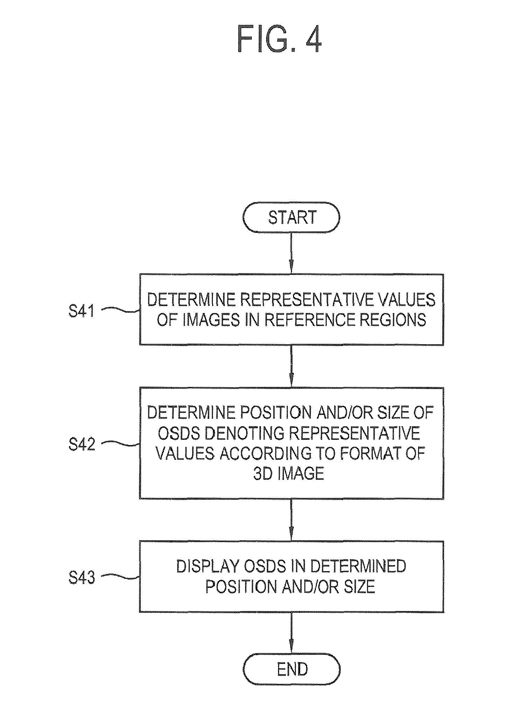

FIG. 4 is a flowchart illustrating another control method of the display apparatus 1 of FIG. 1 according to exemplary embodiments. In operation S41, the display apparatus 1 determines representative values of images in reference regions of left-eye and right-eye images of a 3D image.

Next, in operation S42, the display apparatus 1 determines position and/or size of OSDs denoting the representative values according to a format of the 3D image. The 3D image may have a format in which a left-eye image and a right-eye image are loaded in a single frame, for example, top/bottom, side-by-side, line-by-line, or pixel-by-pixel formats.

The method illustrated in FIG. 4 may alternatively be embodied in an image processing apparatus that does not include a display unit. In that instance, the image processing apparatus may output the representative values of reference regions along with the left-eye and right-eye images of the 3D image to an external display unit.

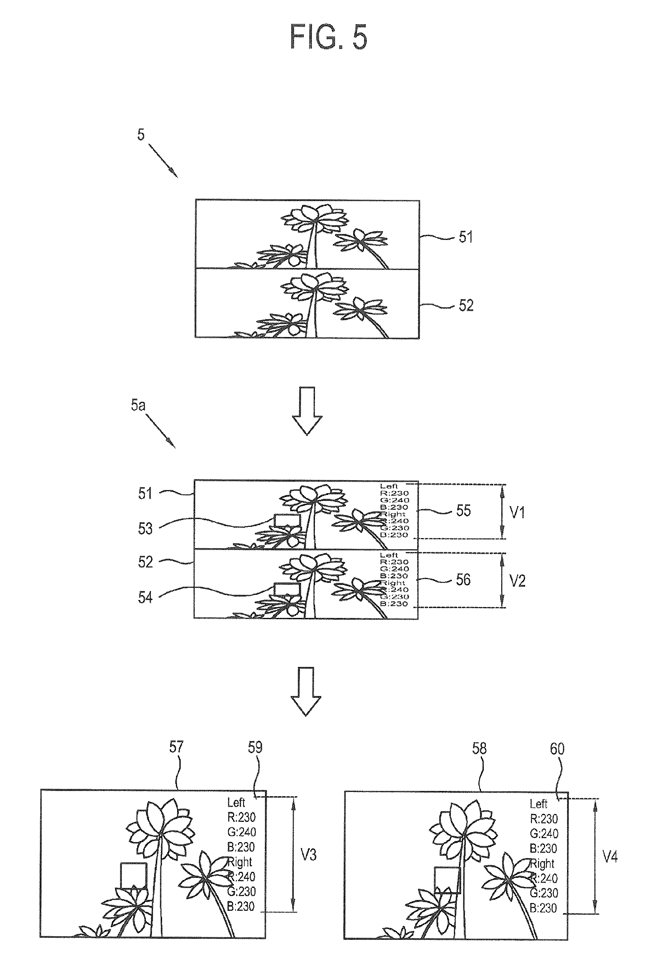

FIG. 5 shows illustrative examples of left-eye and right-eye images according to another exemplary embodiment. As shown in FIG. 5, the left-eye image 51 and the right-eye image 52, in a top/bottom format, are disposed in a frame 5. In this case, the display apparatus 1 determines representative values of images in reference regions 53 and 54 in a frame 5a in consideration of arrangement of the left-eye image 51 and the right-eye image 52. Further, the display apparatus 1 determines position and size of OSDs denoting the determined representative values in consideration of the arrangement of the left-eye image 51 and the right-eye image 52. That is, the display apparatus 1 may dispose the OSDs 55 and 56 up and down. Also, the display apparatus 1 may determine lengths V1 and V2 of the OSDs 55 and 56 to be half of normal lengths V3 and V4. Next, referring back to FIG. 4, the display apparatus 1 superimposes the OSDs 55 and 56 on the left-eye image 51 and the right-eye image 52 in the determined position and size.

Then, when separately displaying a left-eye image 57 and a right-eye image 58 from the frame 5a, OSDs 59 and 60 denoting the representative values may be displayed with the normal lengths V3 and V4.

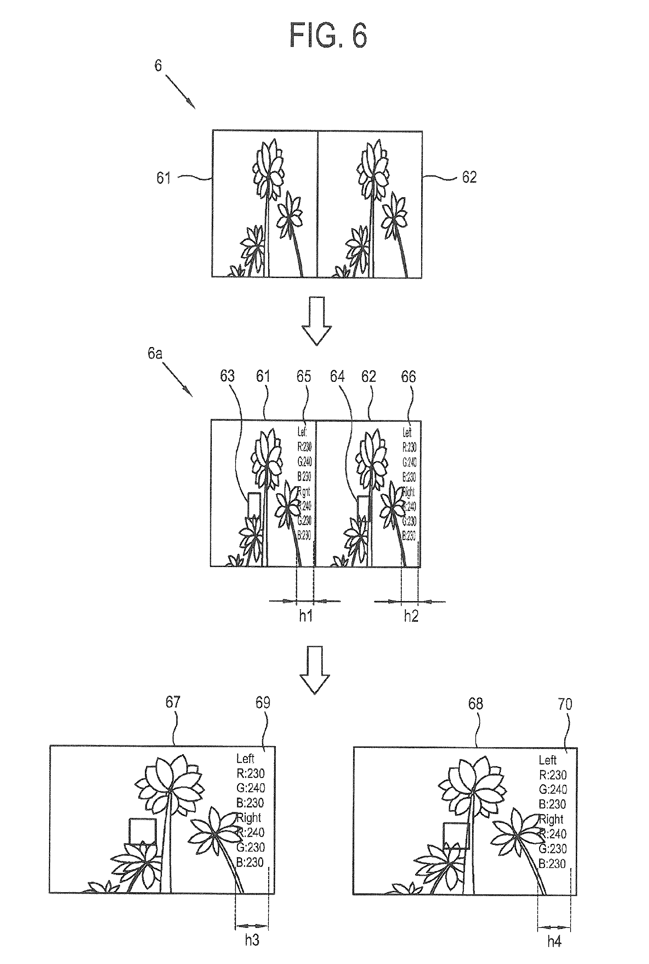

FIG. 6 shows illustrative examples of left-eye and right-eye images according to still other exemplary embodiments. As shown in FIG. 6, the left-eye image 61 and the right-eye image 62, in a side-by-side format, are respectively disposed on the right and left in a frame 6. In this case, the display apparatus 1 determines representative values of images in reference regions 63 and 64 in a frame 6a in consideration of arrangement of the left-eye image 61 and the right-eye image 62. Further, the display apparatus 1 determines position and size of OSDs denoting the determined representative values in consideration of the arrangement of the left-eye image 61 and the right-eye image 62. That is, the display apparatus 1 may superimpose the OSDs 65 and 66 on the right and left. Also, the display apparatus 1 may determine widths h1 and h2 of the OSDs 65 and 66 to be half of normal widths h3 and h4. The display apparatus 1 superimposes the OSDs 65 and 66 on the left-eye image 61 and the right-eye image 62 in the determined position and size.

Then, when separately displaying a left-eye image 67 and a right-eye image 68 from the frame 6a, OSDs 69 and 70 denoting the representative values may be displayed with the normal widths h3 and h4.

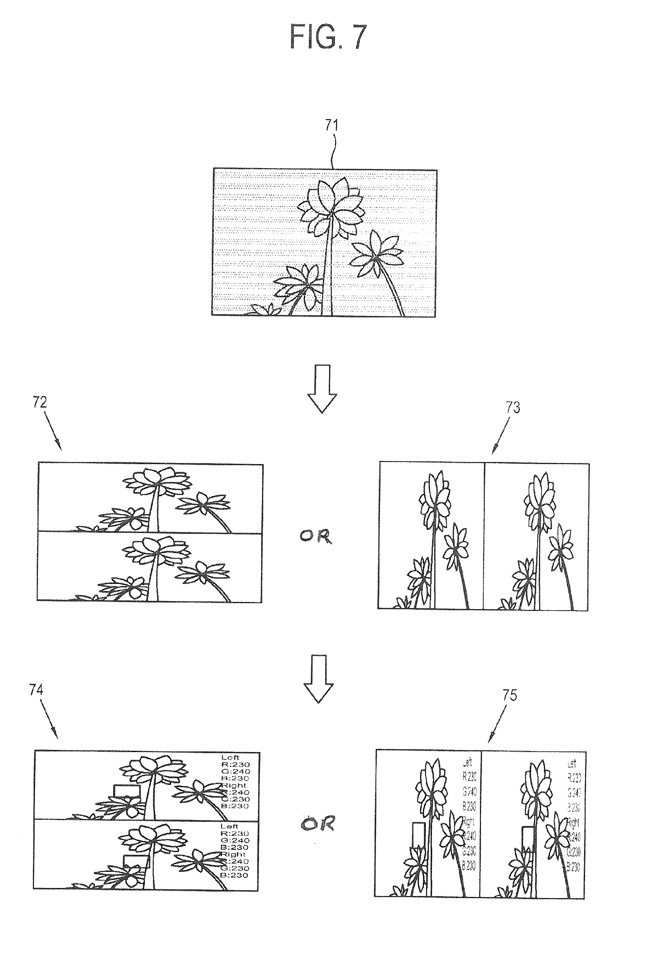

FIG. 7 shows illustrative examples of left-eye and right-eye images according to other exemplary embodiments. As shown in FIG. 7, the left-eye image and the right-eye image, in a line-by-line format, are alternately disposed line by line in a frame 7. In this case, the display apparatus 1 converts a 3D image 71 in the line-by-line format into a 3D image 72 or 73 in a top/bottom format or a side-by-side format. Next, the display apparatus 1 determines representative values of reference regions of left-eye and right-eye images of a 3D image 74 or 75 in a converted format according to a corresponding format and displays OSD denoting the representative values. Alternatively, when the left-eye image and the right-eye image are disposed in a pixel-by-pixel format, the display apparatus 1 may also convert a 3D image in the pixel-by-pixel format into a 3D image in a top/bottom format or a side-by-side side by side format

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image processor that processes a three-dimensional (3D) image including a left-eye image and a right-eye image;
a display unit that alternately displays the left-eye image and the right-eye image of the 3D image processed by the image processor; and
a controller that determines representative values of images in reference regions of the left-eye image and the right-eye image, the reference regions referring to corresponding positions of the left-eye and right-eye images, and displaying the determined representative values of the reference regions on at least one of the left-eye image and the right-eye image.

2. The display apparatus of claim 1, wherein the representative values comprise an average value of pixels included in the reference region of the image.

3. The display apparatus of claim 1 or 2, wherein the controller superimposes a boundary of the reference region on at least one of the left-eye image and the right-eye image.

4. The display apparatus of one of claims 1 to 3, wherein the controller superimposes the representative values on at least one of the left-eye image and the right-eye image as on-screen display information (OSD).

5. The display apparatus of claim 4, wherein the controller determines at least one of a position and a size of the OSD according to a format of the 3D image.

6. The display apparatus of claim 5, wherein the OSD has a first height and a first width when the left-eye image and the right-eye image are transmitted in separate frames, and
the left-eye image and the right-eye image are converted into a single frame in a first format.

7. The display apparatus of claim 6, wherein:
the OSD has a second height when the left-eye image and the right-eye image are converted into a single frame,
the second height is half the first height,
the OSD has a second width when the left-eye image and the right-eye image are converted into a single frame, and
the second width is half the first width.

8. The display apparatus of claim 7, wherein:
the left-eye image and the right-eye image are converted into a single frame in a second format, and
the second format is different than the first format.

9. A control method of a display apparatus which alternately displays a left-eye image and a right-eye image of a three-dimensional (3D) image, the control method comprising:
determining representative values of images in reference regions of the left-eye image and the right-eye image, the reference regions referring to corresponding positions of the left-eye and right-eye images; and
displaying the determined representative values of the reference regions on at least one of the left-eye image and the right-eye image.

10. The control method of claim 9, wherein the representative values comprise an average value of pixels included in the reference region of the images.

11. The control method of claim 9 or 10, further comprising superimposing a boundary of the reference region on at least one of the left-eye image and the right-eye image.

12. The control method of one of claims 9 to 11, further comprising superimposing the representative values on at least one of the left-eye image and the right-eye image as on-screen display information (OSD).

13. The control method of claim 12, further comprising determining at least one of a position and a size of the OSD according to a format of the 3D image.

14. The control method of claim 13, wherein the OSD has a first height and a first width when the left-eye image and the right-eye image are transmitted in separate frames, and
the left-eye image and the right-eye image are converted into a single frame in a first format.

15. The control method of claim 14, wherein:
the OSD has a second height when the left-eye image and the right-eye image are converted into a single frame,
the second height is half the first height,
the OSD has a second width when the left-eye image and the right-eye image are converted into a single frame, and
the second width is half the first width.
